# EUROPEAN PATENT SPECIFICATION

(11) **EP 2 505 879 B1**
(45) Date of publication and mention of the grant of the patent: **14.05.2014**
(21) Application number: 12162234.4
(22) Date of filing: 29.03.2012
(51) Int. Cl.: F16H 57/04, F02C 7/32, F02C 7/36

(54) **Gearbox comprising an oil spreader**
Getriebe mit einem Ölverteiler
Boîte de vitesses comprenant un dissipateur d'huile

(30) Priority: 31.03.2011 US 201113077205
(43) Date of publication of application: 03.10.2012
(73) Proprietor: General Electric Company, Schenectady, NY 12345 (US)
(72) Inventor: Karafillis, Apostolos Pavlos, Lynn, MA Massachusetts 01905 (US); Pare, Justin Paul, Hooksett, NH New Hampshire 03106 (US); Patel, Niranjan, Lynn, MA Massachusetts 01905 (US); Devendorf, Brian, Lynn, MA Massachusetts 01905 (US)
(74) Representative: Williams, Andrew Richard

(56) References cited:
- DE-A1-102007 040 474
- US-A- 3 520 632
- US-A- 4 329 968
- US-A- 4 964 489

## Description

### BACKGROUND OF THE INVENTION

This invention relates generally to gearboxes and more particularly to control of oil flow in gearboxes for gas turbine engines.

A gas turbine engine usually includes one or more mechanically-driven accessories, such as fuel or oil pumps, generators or alternators, control units, and the like. Such accessories are mounted to an accessory gearbox ("AGB") which extracts torque from the engine, and drives each accessory at the required rotational speed, using an internal gear train.

Pressurized oil flow is delivered to the AGB for lubrication and cooling. The spent oil from the AGB drains back to a supply and scavenging system of the engine. Because such engines are often used in aircraft, the engine's orientation (i.e. its roll and pitch angle) varies significantly during operation.

Some engine orientations can cause an excessive amount of oil draining from the AGB to flow into a bearing sump of the engine, instead of directly to an oil tank. This excessive oil inflow can exceed the capability of the supply and scavenge system to remove or scavenge oil from the sump. This in turn can cause churning or flooding of oil in the sump, which in turn can cause engine stalls. It is possible to control oil flow with devices such as baffles. However, such devices have a significant size and therefore cannot be installed without extensive disassembly of the gearbox.

Accordingly, there is a need for a compact device to control oil drain flow within a gearbox.

US 4,964,489 relates to a jet spray slinger for lubricating moving parts within a housing, and discloses features generally corresponding to the preamble of claim 1 herein.

### BRIEF DESCRIPTION OF THE INVENTION

The invention provides a gearbox in accordance with claim 1 herein.

### BRIEF DESCRIPTION OF THE DRAWINGS

The invention may be best understood by reference to the following description taken in conjunction with the accompanying drawing figures in which:
FIG. 1 is a perspective view of a gas turbine engine incorporating an accessory gearbox constructed according to the present invention;
FIG. 2 is a partially-sectioned front elevation view of an accessory gearbox in a first orientation;
FIG. 3 is a partially-sectioned front elevation view of an accessory gearbox in a second orientation;
FIG. 4 is a partially-sectioned front elevation view of the gearbox of FIG. 2 with an oil spreader installed therein according to the present invention, showing an upper bearing assembly thereof;
FIG. 5 is a partially-sectioned front elevation view of the gearbox of FIG. 2 with an oil spreader installed therein according to of the present invention, showing a lower bearing assembly thereof;
FIG. 6 is a top plan view of the oil spreader;
FIG. 7 is a side elevation view of the oil spreader of FIG. 6;
FIG. 8 is a view taken along lines 8-8 of FIG. 7; and
FIG. 9 is a cross-sectional view of the oil spreader of FIG. 6.

### DETAILED DESCRIPTION OF THE INVENTION

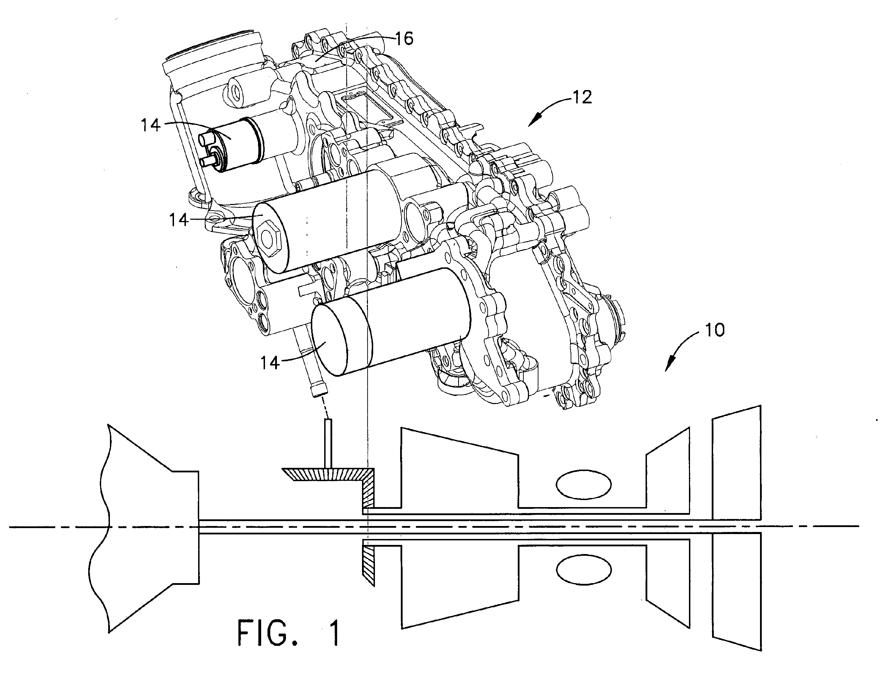

Referring to the drawings wherein identical reference numerals denote the same elements throughout the various views, FIG. 1 depicts an aircraft gas turbine engine 10. The illustrated example is a turboshaft engine, but the principles of the present invention are applicable to any type of gearbox having a circulating oil supply. The engine 10 has an accessory gearbox ("AGB") 12 mounted to it. Various shaft-driven engine accessories (shown generally at 14), such as oil and fuel pumps, starters, generators, alternators, etc. are mounted to the AGB 12. Torque from the engine 10 is transferred through a gear train housed within the AGB 12 to drive each of the individual accessories 14.

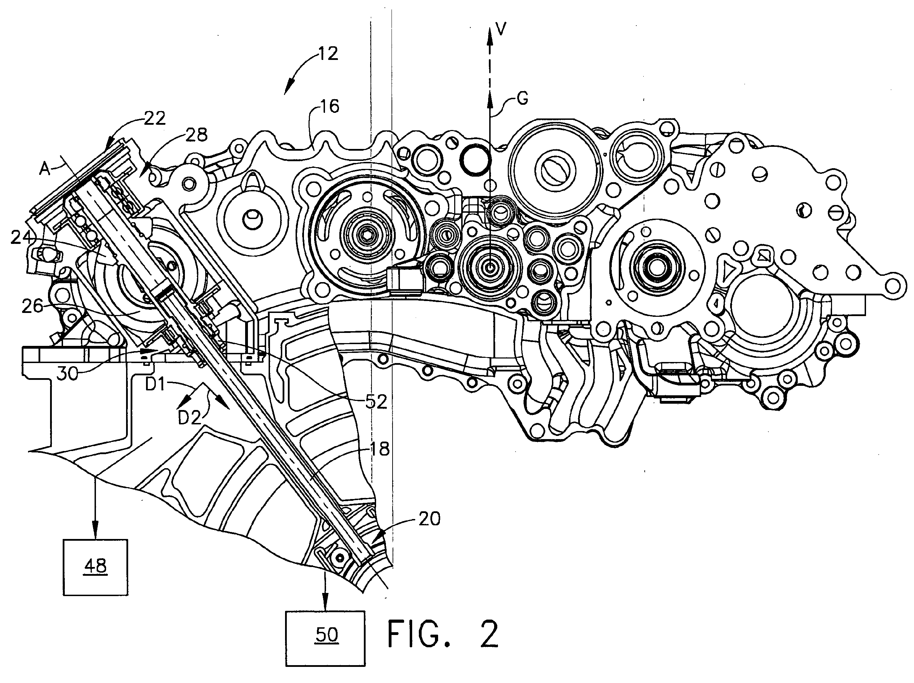

FIG. 2 is a partially cut-away view of the AGB 12. The AGB 12 has a stationary housing 16. A shaft 18, also referred to as an "A-axis shaft", is mounted in the housing 16 and extends along a radial axis (labeled "A") that intersects the longitudinal centerline axis of the engine 10. The shaft 18 has an inner end 20 and an outer end 22. The inner end 20 is engaged with a drive gear (not shown) of the engine 10. The outer end 22 carries a bevel gear 24 which engages another bevel gear 26. The bevel gear 26 is engaged with other gears (not shown) within the housing 16. The gears are configured in a known manner to drive multiple output shafts at the speeds and directions needed for the various accessories 14 (shown in FIG. 1).

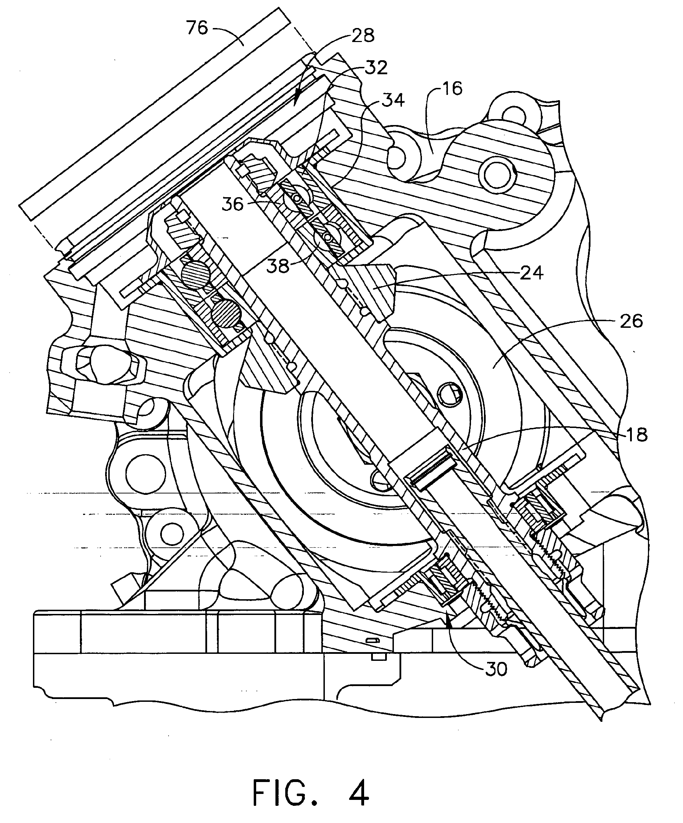

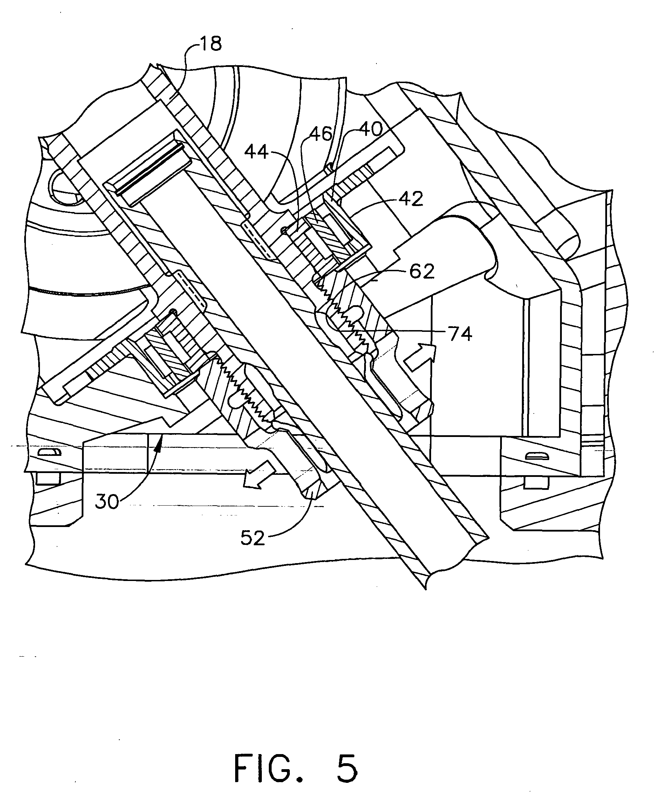

FIGS. 4 and 5 show in more detail how the shaft 18 is mounted. Specifically, the shaft 18 rotates in an upper bearing assembly 28 and a lower bearing assembly 30. It is noted that, as used herein, directional terms applied to certain components (for example, "upper", "lower", "inner", and "outer") are intended for the purpose of convenient reference and description, and do not imply that any particular orientation of the component is necessary relative to the external environment.

The upper bearing assembly 28 comprises an outer race 32 received in an upper bore 34 of the housing 16, an inner race 36 fixedly attached to the shaft 18 (for example by interference fit), and a plurality of rolling elements 38 such as balls or rollers disposed between the inner and outer races 36 and 32. As used herein, the term "fixedly" means that the two components which are "fixedly attached" to each other do not experience relative movement to each other during normal operation of the AGB 12. The diameter of the upper bore 34 is selected to be greater than the maximum diameter of the bevel gear 24.

The lower bearing assembly 30 (best seen in FIG. 5) comprises an annular outer race 40 fixedly mounted to a lower bore 42 in the housing 16 (for example by interference fit), an annular inner race 44 fixedly mounted to the shaft 18 (for example by interference fit), and a plurality of rolling elements 46 such as balls or rollers disposed between the inner and outer races 44 and 40.

Referring back to FIG. 2, the interior of the housing 16, including the upper and lower bearing assemblies 28 and 30, is provided with a flow of lubricant such as petroleum-based oil for cooling and lubrication. The lubricant flow is provided by a supply and scavenging system of a known type, which is not shown. The spent oil drains vertically downward by gravity. Some of the oil drain flow (shown by arrow "D1") passes along a first internal flow path which leads to an oil tank 48 (shown schematically in FIG. 2). The remainder of the oil drain flow (shown by arrow "D2") runs along a second internal flow path, down the exterior of the shaft 18, and eventually into a bearing sump 50 of the engine (shown schematically in FIG. 2). The oil tank 48 and the bearing sump 50 are both part of the supply and scavenging system. FIG. 2 corresponds to conditions during level-flight operation of the engine. In this orientation, an arrow "G" representing a vertical or 12:00 o'clock direction of the AGB 12 coincides with an earth-vertical vector "V" shown. In this orientation, the proportion of the oil drain flow passing into the bearing sump 50 is within the design capacity of the supply and scavenging system to remove excess oil from the bearing sump 50.

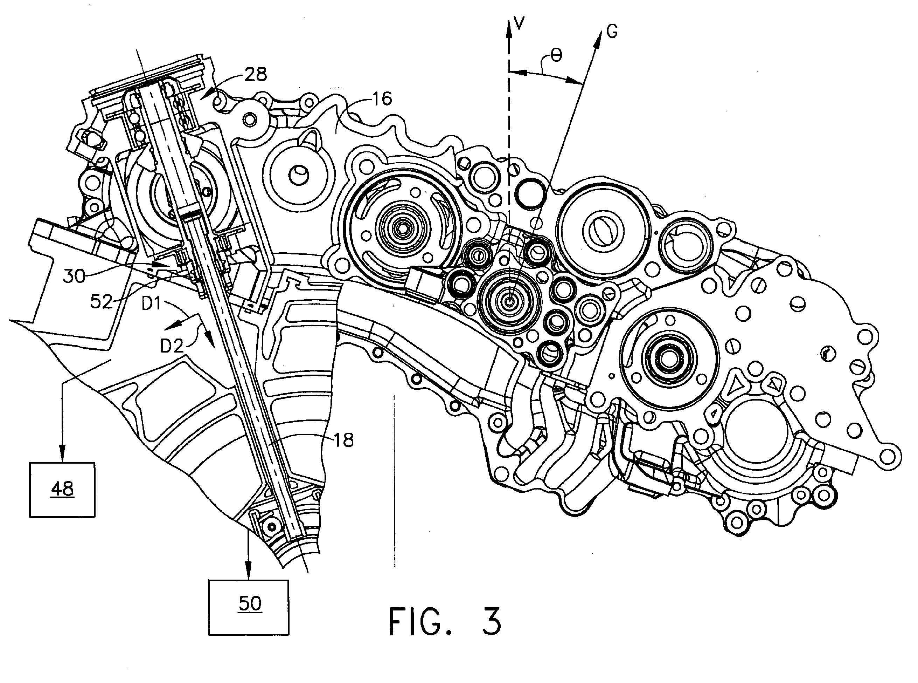

FIG. 3 corresponds to operation of the engine 10 and AGB 12 in a position rolled away from the vertical orientation. In this orientation, an arrow "G" representing a vertical or 12:00 o'clock direction of the AGB 12 defines a nonzero angle θ with an earth-vertical vector V. In this orientation, a greater proportion of the oil drain flow D2 passes down along the shaft 18 and into the bearing sump 50 than when then engine 10 is in a vertical orientation. Under some circumstances this flow can exceed the scavenging ability of the bearing sump 50, leading to oil churning and/or flooding, and possibly causing engine stalls.

To prevent undesired oil drain flow in to the bearing sump 50, the AGB is provided with an oil spreader 52 (seen in FIG. 5) which is attached to the shaft 18 just below the lower bearing assembly 30.

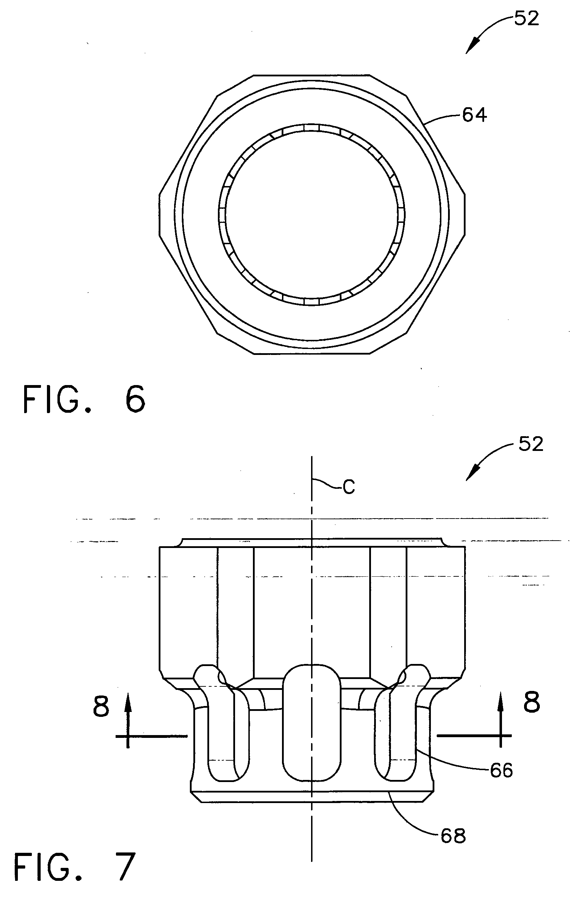

FIGS. 6-9 illustrate the oil spreader 52 in more detail. The oil spreader has an annular body (generally in the shape of a hollow cylinder) with a central axis "C", an upper end 54, and a lower end 56. As illustrated it is a single integral component made from a metal alloy, but it could be built up from smaller components. It is roughly divided into an upper portion 58 and a lower portion 60. The interior of the upper portion 58 is provided with female threads 62, and the exterior may be formed into wrenching flats 64, i.e. planar surfaces arranged in a hexagon or other shape to facilitate installation and removal of the oil spreader 52 using a wrench, spanner, or other similar tool. The maximum outer diameter of the oil spreader 52 is less than the inside diameter of the outer race 40 of the lower bearing assembly 30.

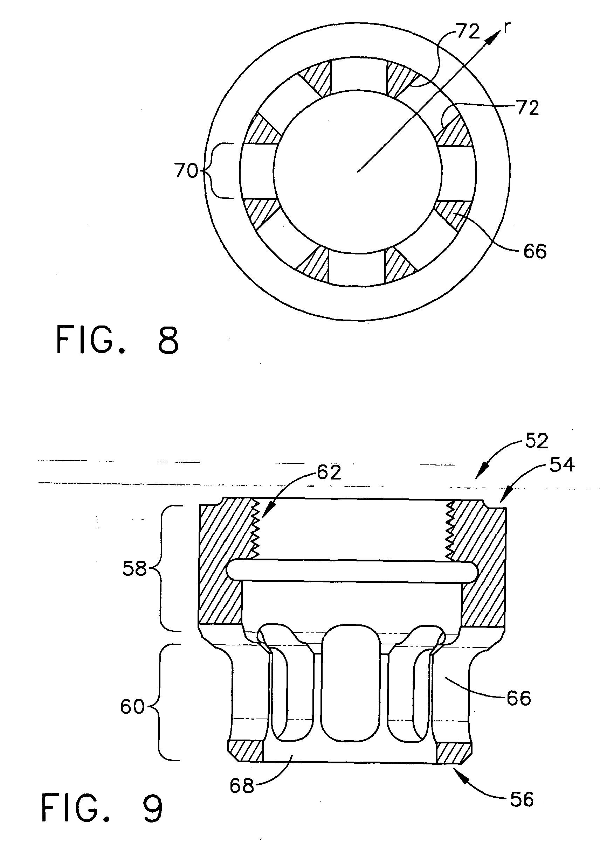

An annular array of circumferentially spaced-apart vanes 66 extend in a generally axial direction between the upper portion 58 and a ring 68 located at the lower end 56. The ring 68 interconnects the distal ends of the vanes 66. Open slots 70 are defined between the sidewalls 72 of each pair of adjacent vanes 66. The vanes 66 are configured so as to function as a centrifugal pump and effectively create a radially outward air flow when the oil spreader 52 rotates about its central axis C. In the illustrated example, each of the vanes 66 is defined in part by two sidewalls 72 oriented at an oblique angle to each other, creating a wedge-shaped in cross-section. The sidewalls 72 of adjacent vanes 66 are aligned parallel to a radial direction, denoted "r" in FIG. 8. Depending on the particular application, the vanes 66 may have a different cross-sectional shape or may be turned at a different angle relative to the radial direction r in order to provide an effective air flow. The number and size of the vanes 66 may also be varied to suit a particular application.

The oil spreader 52 is shown installed in FIG. 5. The female threads 62 engage mating male threads 74 of the shaft 18, and the oil spreader 52 is screwed into position abutting the inner race 44 of the lower bearing assembly 30. The oil spreader 52 may be installed without disassembling or removing the AGB 12 from the engine 10. To accomplish this, a cover 76 (seen in FIG. 4) is removed and the shaft 18 is withdrawn from the AGB 12. The oil spreader 52 is then threaded onto the shaft 18. The shaft 18 is then reinserted. Because the outer diameter of the oil spreader 52 is less than the inside diameter of the outer race 40, it is able to pass therethrough without interference. Finally the cover 76 is replaced.

In operation, the rotating oil spreader 52 generates a radially outward flow of air, in the manner of a centrifugal pump. This flow of air (shown schematically by the block arrows in FIG. 5) entrains oil and directs it away from the shaft 18 and the flowpath to the bearing sump 50, and towards the oil tank 48 (seen in FIG. 3). This ensures that the flow rate of oil into the bearing sump 50 is not excessive regardless of the orientation of the AGB 12.

The oil spreader described herein has several advantages as compared to prior art configurations. It can be both a production component and a field retrofit. It is inexpensive and in the case of a field retrofit, it does not require removal of the AGB 12, as the shaft 18 can be removed and reinstalled while the AGB 12 remains installed on the engine 10. This represents a significant savings in time, effort, and cost compared to other means for controlling oil flow.

## Claims

1. A gearbox (12), comprising:
a housing (16) enclosing at least one gear;
a shaft (18) mounted for rotation in the housing (16), the shaft (18) having a central axis (A), and upper and lower ends (22,20); and
an oil spreader (52) attached to and surrounding a portion of the shaft (18), the oil spreader (52) comprising an annular body with a central axis (C), opposed upper and lower ends (54,56), an upper portion (58) adjacent the annular body upper end, and a lower portion (60) adjacent the annular body lower end, the lower portion (60) comprising at least two vanes (66) extending between the upper portion (58) and an annular ring (68) disposed at the annular body lower end, the vanes (66) defining slots (70) therebetween;
**characterised in that**:
the shaft (18) is mounted to the gearbox (12) by a lower bearing assembly (30) and an upper bearing assembly (28), and the oil spreader (52) is disposed abutting the lower bearing assembly (30);
wherein the lower bearing assembly (30) comprises:
an annular outer race (40) fixedly mounted to a lower bore (42) in the housing (16);
an annular inner race (44) fixedly mounted to the shaft (18); and
a plurality of rolling elements (46) disposed between the inner and outer races;
where a maximum outside diameter of the oil spreader (52) is sized to pass through an inside diameter of the outer race (40) without interference.

2. The gearbox (12) of claim 1, wherein the lower portion (60) of the oil spreader (52) comprises an annular array of eight equally spaced-apart vanes (66) extending between the upper portion (58) and the annular ring (68), wherein an open slot is defined between sidewalls (72) of each pair of adjacent vanes (66).

3. The gearbox (12) of either of claim 1 or 2, wherein the oil spreader (52) is attached to the shaft (18) by a threaded connection (62).

4. The gearbox (12) of any of claims 1 to 3, wherein an exterior surface of the upper portion (58) of the oil spreader (52) defines a plurality of wrenching flats (64).

5. The gearbox (12) of any of claims 1 to 4, wherein each of the vanes (66) of the oil spreader (52) is defined in part by a pair of spaced-apart sidewalls (72) which are disposed at an oblique angle to each other.

6. The gearbox (12) of claim 5, wherein the sidewalls (72) are aligned parallel to a direction radial to the oil spreader central axis (C).

7. The gearbox (12) of claim 1, wherein the lower portion (60) comprises an array of vanes (66) extending between the upper portion (58) and the annular ring (68).

8. The gearbox (12) of either of claim 1 or 7, further comprising female threads (62) formed on an interior surface of the upper portion (58).

9. The gearbox (12) of either of claim 7 or 8, wherein an exterior surface of the upper portion (58) defines a plurality of wrenching flats (64).

## Patentansprüche

1. Getriebekasten (12), der umfasst:
ein Gehäuse (16), das mindestens ein Getriebe einhaust;
einen Schaft (18), der rotierbar im Gehäuse (16) angebracht ist, wobei der Schaft (18) eine Mittelachse (A) und obere und untere Enden (22, 20) aufweist; und
einen Ölverteiler (52), der an einem Bereich des Schafts (18) befestigt ist und diesen Bereich umgibt, wobei der Ölverteiler (52) einen ringförmigen Körper mit einer Mittelachse (C), sich gegenüberliegenden oberen und unteren Enden (54, 56), einem oberen Abschnitt (58), der an dem oberen Ende des ringförmigen Körpers angrenzt, und einen unteren Bereich (60), der an einem unteren Ende des ringförmigen Körpers angrenzt, aufweist, wobei der untere Bereich (60) mindestens zwei Schaufeln (66) aufweist, die sich zwischen dem oberen Abschnitt (58) und einem ringförmigen Ring (68), der an dem unteren Ende des ringförmigen Körpers angeordnet ist, erstrecken, wobei die Schaufeln (66) zwischen einander Aussparungen (70) bilden;
**dadurch gekennzeichnet, dass**:
der Schaft (18) mittels einer unteren Lagerbaugruppe (30) und einer oberen Lagerbaugruppe (28) an dem Getriebekasten (12) angeordnet ist, und der Ölverteiler (52) angrenzend an die untere Lagerbaugruppe angeordnet ist;
wobei die untere Lagerbaugruppe (30) umfasst:
einen ringförmigen Außenring (40), der starr an einer unteren Bohrung (42) in dem Gehäuse (16) angebracht ist;
einen ringförmigen Innenring (44), der starr an dem Schaft (18) angebracht ist; und
eine Vielzahl von Wälzkörpern (46), die zwischen dem Innenring und dem Außenring angeordnet sind;
wobei ein größter Außendurchmesser des Ölverteilers (52) so dimensioniert ist, dass er durch einen Innendurchmesser des Außenrings (40) ohne Beeinträchtigung hindurchpasst.

2. Getriebekasten (12) gemäß Anspruch 1, bei dem der untere Abschnitt (60) des Ölverteilers (52) eine ringförmige Anordnung von acht gleichmäßig voneinander beabstandeten Schaufeln (66) aufweist, die sich zwischen dem oberen Bereich (58) und dem ringförmigen Ring (68) erstrecken, wobei eine offene Aussparung zwischen Seitenwänden (72) von jedem Paar zueinander benachbarter Schaufeln (66) gebildet ist.

3. Getriebekasten (12) gemäß Anspruch 1 oder 2, bei dem der Ölverteiler (52) an dem Schaft (18) mittels einer Gewindeverbindung (62) angebracht ist.

4. Getriebekasten (12) gemäß einem der Ansprüche 1 bis 3, bei dem eine äußere Oberfläche des oberen Abschnitts (58) des Ölverteilers (52) eine Vielzahl von Schraubflächen (64) definiert.

5. Getriebekasten (12) gemäß einem der Ansprüche 1 bis 4, bei dem jede der Schaufeln (66) des Ölverteilers (52) teilweise durch ein Paar von voneinander beabstandeten Seitenwänden (72) definiert ist, die in einem schrägen Winkel zueinander angeordnet sind.

6. Getriebekasten (12) gemäß Anspruch 5, bei dem die Seitenwände (72) parallel zu einer Richtung radial zur Mittelachse (C) des Ölverteilers angeordnet sind.

7. Getriebekasten (12) gemäß Anspruch 1, bei dem der untere Abschnitt (60) eine Anordnung von Schaufeln (66) umfasst, die sich zwischen dem oberen Abschnitt (58) und dem ringförmigen Ring (68) erstrecken.

8. Getriebekasten (12) gemäß Anspruch 1 oder 7, der außerdem weibliche Gewinde (62) aufweist, die an einer inneren Oberfläche des oberen Abschnitts (58) gebildet sind.

9. Getriebekasten (12) gemäß Anspruch 7 oder 8, bei dem eine äußere Oberfläche des oberen Abschnitts (58) eine Vielzahl von Schraubflächen (64) definiert.

## Revendications

1. Boîte de vitesses (12), comprenant :
un boîtier (16) renfermant au moins un engrenage ;
un arbre (18) monté à rotation dans le boîtier (16), l'arbre (18) ayant un axe central (A) et des extrémités supérieure et inférieure (22, 20) ; et
un distributeur d'huile (52) fixé à une portion de l'arbre (18) et entourant celle-ci, le distributeur d'huile (52) comprenant un corps annulaire avec un axe central (C), des extrémités supérieure et inférieure opposées (54, 56), une portion supérieure (58) adjacente à l'extrémité supérieure du corps annulaire et une portion inférieure (60) adjacente à l'extrémité inférieure du corps annulaire, la portion inférieure (60) comprenant au moins deux ailettes (66) s'étendant entre la portion supérieure (58) et une bague annulaire (68) disposée sur l'extrémité inférieure du corps annulaire, les ailettes (66) définissant des fentes (70) entre elles ;
**caractérisée en ce que** :
l'arbre (18) est monté sur la boite de vitesses (12) par un ensemble de palier inférieur (30) et un ensemble de palier supérieur (28) et le distributeur d'huile (52) est disposé abouté sur l'ensemble de palier inférieur (30) ;
dans lequel l'ensemble de palier inférieur (30) comprend :
un roulement annulaire externe (40) monté fixe sur un alésage inférieur (42) dans le boîtier (16) ;
un roulement annulaire interne (44) monté fixe sur l'arbre (18) ; et
une pluralité d'éléments roulants (46) disposés entre les roulements interne et externe ;
où un diamètre externe maximal du distributeur d'huile (52) est dimensionné pour passer à travers un diamètre interne du roulement externe (40) sans interférence.

2. Boîte de vitesses (12) selon la revendication 1, dans laquelle la portion inférieure (60) du distributeur d'huile (52) comprend un réseau annulaire de huit ailettes (66) uniformément espacées s'étendant entre la portion supérieure (58) et la bague annulaire (68), dans laquelle une fente ouverte est définie entre les parois latérales (72) de chaque paire d'ailettes adjacentes (66).

3. Boîte de vitesses (12) selon l'une quelconque des revendications 1 ou 2, dans laquelle le distributeur d'huile (52) est fixé à l'arbre (18) par un raccord fileté (62).

4. Boîte de vitesses (12) selon l'une quelconque des revendications 1 à 3, dans laquelle une surface externe de la portion supérieure (58) du distributeur d'huile (52) définit une pluralité de pans de serrage (64).

5. Boîte de vitesses (12) selon l'une quelconque des revendications 1 à 4, dans laquelle chacune des ailettes (66) du distributeur d'huile (52) est définie en partie par une paire de parois latérales espacées (72) qui sont disposées sous un angle oblique mutuel.

6. Boîte de vitesses (12) selon la revendication 5, dans laquelle les parois latérales (72) sont alignées parallèlement à une direction radiale à l'axe central (C) du distributeur d'huile.

7. Boîte de vitesses (12) selon la revendication 1, dans laquelle la portion inférieure (60) comprend un réseau d'ailettes (66) s'étendant axialement entre la portion supérieure (58) et la bague annulaire (68).

8. Boîte de vitesses (12) selon l'une quelconque des revendications 1 ou 7, comprenant en outre des filets femelles (62) formés sur une surface interne de la portion supérieure (58).

9. Boîte de vitesses (12) selon l'une quelconque des revendications 7 ou 8, dans laquelle une surface externe de la portion supérieure (58) définit une pluralité de pans de serrage (64).
